# EUROPÄISCHE PATENTANMELDUNG

(11) **EP 2 189 763 A2**
(43) Veröffentlichungstag der Anmeldung: **26.05.2010**
(21) Anmeldenummer: 09014560.8
(22) Anmeldetag: 23.11.2009
(51) Int. Cl.: G01D 11/30

(54) **Vorrichtung und Verfahren zum Anordnen eines Gehäuses in einer vorgegebenen Lage relativ zu einem Referenzobjekt**

(30) Priorität: 25.11.2008 CH 18402008
(71) Anmelder: Baumer Innotec AG, 8500 Frauenfeld (CH)
(72) Erfinder: Dossenbach, Daniel, 8240 Thayngen (CH); Röhm, Thomas, 78467 Konstanz (DE); Beerli, Martin, 8500 Frauenfeld (CH)
(74) Vertreter: Schmidt, Oliver

(57) **Zusammenfassung**

Zum Positionieren und/oder Ausrichten eines Gehäuses (5) bezüglich eines Referenzobjekts ist am Gehäuse (5) ein abtrennbares Positioniermittel (21) ausgebildet. Das Positioniermittel (21) umfasst mindestens ein Anschlagelement, welches in Anlage mit dem Referenzobjekt gebracht wird. Nach dem Befestigen des Gehäuses (5) in der gewünschten Lage wird das Positioniermittel (21) vom Gehäuse (5) getrennt.

## Beschreibung

Gegenstand der Erfindung ist eine Vorrichtung und ein Verfahren zum Anordnen eines Gehäuses in einer vorgegebenen Lage relativ zu einem Referenzobjekt gemäss den Merkmalen der Patentansprüche 1 und 9.

Sensoren umfassen einen oder mehrere in einem Gehäuse angeordnete Messgrössenwandler. Oft müssen Sensoren in einer definierten Lage relativ zu einem Maschinenteil oder einem zu erfassenden Objekt angeordnet, positioniert, ausgerichtet oder montiert werden. Dies gilt insbesondere bei Positions-, Lage- oder Winkelsensoren, welche einen kurzen Mess- bzw. Erfassungsbereich haben und in geringer Entfernung zu den zu erfassenden Objekten montiert werden müssen. Beispiele hierfür sind induktive oder kapazitive Näherungsschalter oder Magnetsensoren, bei denen jeweils ein magnetoresistives Sensorelement in das Gehäuse eingebaut ist. Mit solchen Sensoren können z.B. Drehwinkel oder Drehzahlen von Wellen überwacht werden. Für diesen Zweck ist ein magnetisches Polrad bzw. ein Magnetträger mit einem Magnetring koaxial und drehfest mit der Welle verbunden. Das Gehäuse wird in einem geringen radialen Abstand von z.B. 0.4mm zum Magnetring an einem Maschinenteil befestigt, welches starr mit dem Lager der zu erfassenden Welle verbunden ist. Zum Vorgeben des Abstandes zwischen dem Gehäuse und dem Polrad bei der Montage des Sensors werden herkömmlich Hilfsmittel wie Distanzplättchen bzw. Lehren verwendet. Die Montage solcher Sensoren ist eher kompliziert und zeitaufwändig, da mehrere lose Teile gleichzeitig gehalten bzw. bedient werden müssen, nämlich der Sensor selbst, die Lehre, Montagemittel wie z.B. Schrauben und gegebenenfalls ein Montagewerkzeug wie z.B. ein Schraubendreher. Darunter kann auch die Genauigkeit der Positionierung leiden. Die für die Montage solcher Sensoren erforderlichen Distanzplättchen werden oft als Zubehör mit dem jeweiligen Sensor mitgeliefert. Dies kann sich auch auf die Kosten solcher Sensoren auswirken, da mehr Teile zu bewirtschaften sind. Nicht nur bei Sensorgehäusen, sondern auch bei anderen Gehäusen wie z.B. bei Aktorgehäusen sind Hilfsmittel für eine einfache, genaue und kostengünstige Positionierung und/oder Ausrichtung von Vorteil. Der Begriff "Aktor" umfasst allgemein Wandlerelemente, die eine Eingangsgrösse in eine Ausgangsgrösse umwandeln.

Es ist Aufgabe der vorliegenden Erfindung, eine relativ kostengünstige und einfach zu bedienende Vorrichtung und ein entsprechendes Verfahren zum Anordnen eines Gehäuses relativ zu einem Objekt zu schaffen.

Diese Aufgabe wird gelöst durch eine Vorrichtung und durch ein Verfahren zum Anordnen eines Gehäuses in einer vorgegebenen Lage relativ zu einem Referenzobjekt gemäss den Merkmalen der unabhängigen Patentansprüche.

Erfindungsgemäss ist am Gehäuse ein abtrennbares oder reversibel von einem Positionierungsbereich entfernbares Positioniermittel ausgebildet. Dieses ist gemäß einer Ausführungsform über dünne, als Sollbruchstellen ausgebildete Verbindungen mit dem Gehäuse verbunden. Beim Montieren des Gehäuses an einem Maschinenteil kann durch Anlegen des Positioniermittels an ein Referenzobjekt die gewünschte Solllage für das Gehäuse vorgegeben und das Gehäuse in dieser Position fixiert werden.
Das Positioniermittel muss dabei nicht manuell gehalten werden, da es mit ausreichender Stabilität am Gehäuse gehalten ist. Das Gehäuse ist vorzugsweise ein Sensorgehäuse oder ein Aktorgehäuse. Der Begriff "Sensor" wird im Zusammenhang mit der vorliegenden Patentanmeldung für ein Sensorgehäuse, in dem ein oder mehrere Sensorelemente angeordnet sind, verwendet. Analoges gilt für den Begriff "Aktor". Referenzobjekt kann z.B. ein vom Sensor zu erfassender Gegenstand sein, beispielsweise ein magnetisches Polrad. Das Positioniermittel kann entsprechend der jeweiligen Anforderungen z.B. zum Vorgeben bzw. Festlegen eines Sollabstandes und/oder zum Verhindern eines Winkelversatzes und/oder eines Transversal- oder Axialversatzes zwischen dem Referenzobjekt und dem Sensor ausgebildet sein. Es dient als Anschlagmittel für den Sensor bei dessen Montage. Im Falle eines zu erfassenden Polrades können z.B. dessen Mantelfläche und/oder dessen Stirnseiten als Anschlagflächen für ein oder mehrere Elemente bzw. Abschnitte des Positioniermittels genutzt werden. Bei alternativen Anwendungen können grundsätzlich auch beliebige andere Maschinenteile als Referenzobjekte zum Positionieren und/oder Ausrichten des Sensors benutzt werden.

Das Positioniermittel kann z.B. einen Abstandshalter oder ein Distanzplättchen umfassen, mit dem der Abstand zwischen dem zu erfassenden Messobjekt und dem Gehäuse bzw. einem oder mehreren fest im Gehäuse angeordneten Sensorelementen auf einen gewünschten Sollwert eingestellt werden kann, bevor das Gehäuse in dieser Lage befestigt wird. Für gewisse Anwendungen genügt eine derartige eindimensionale Distanzvorgabe. Bei anderen Anwendungen kann es erforderlich sein, dass für die Anordnung und/oder Ausrichtung des Sensors zusätzlich oder alternativ andere geometrische Parameter wie Positions-, Lage- und/oder Winkelkoordinaten vorgegeben werden, und dass das entsprechend ausgebildete Positioniermittel an mehreren Stellen bzw. an mehreren Anschlagflächen des Referenzobjekts anliegt. So können beispielsweise ein oder mehrere am Gehäuse angespritzte Nocken und/oder andere Kontaktelemente zum Festlegen von Positionen, Abständen oder Lagewinkeln verwendet werden.
Nachdem das Gehäuse mit Hilfe des Positioniermittels in die vorgegebene Lage und/oder Position gebracht worden ist, wird es mit geeigneten Befestigungsmitteln, also beispielsweise mittels Schrauben oder Klemmen, am jeweiligen Anlagen- oder Maschinenteil befestigt. Anschliessend kann das Positioniermittel vom Gehäuse abgetrennt und entfernt werden. Für diesen Zweck ist am Positioniermittel vorzugsweise eine Lasche oder ein Haltegriff ausgebildet. Durch Zug an dieser Lasche reissen die Verbindungen zwischen dem Positioniermittel und dem Gehäuse. Die Zugrichtung und die erforderlichen Kräfte zum Durchtrennen der Sollbruchstellen sind so bemessen, dass das Abtrennen und Entfernen des Positioniermittels nicht zu einer Veränderung der Lage des Sensors relativ zum Referenzobjekt führt. Alternativ könnte das Positionierelement auch so ausgebildet sein, dass es durch Bewegungen des Referenzobjekts - im Falle eines Polrades z.B. durch dessen Drehbewegung - vom Gehäuse getrennt oder abgeschliffen werden kann. So kann das Positionierelement z.B. am Gehäuse angespritzte Distanznocken umfassen. Diese können bei Bedarf Sollbruchstellen umfassen. Bei der Befestigung des Gehäuses werden die Distanznocken leicht gegen das Polrad gedrückt. Sobald das Polrad sich zu drehen beginnt, werden die Distanznocken aufgrund der wirkenden Reibungs- und Hebelkräfte abgebrochen.
Im Vergleich zu herkömmlichen Sensoren ist die Montage von Sensoren mit der erfindungsgemässen Vorrichtung einfacher, und die dafür erforderliche Montagezeit kürzer.
Gemäß einer weiteren Ausführungsform der Erfindung ist das Positioniermittel reversibel aus dem Positionierungsbereich entfernbar. Vorteilhaft kann das Positioniermittel oder - element dabei so gehaltert sein, dass es auch in der aus dem Positionierungsbereich entfernten Stellung am Gehäuse befestigt ist. Eine Möglichkeit besteht in einer drehbaren Halterung. Ist das Gehäuse mit Hilfe des Positioniermittels gegenüber dem Referenzobjekt ausgerichtet und befestigt, kann das Positioniermittel dann durch eine Drehung aus dem Positionierungsbereich in eine zweite Stellung bewegt werden, in welcher das Positioniermittel die Messung des Sensors oder die Funktion des Aktors nicht beeinflusst.

Eine weitere Möglichkeit besteht darin, das Positioniermittel entlang des Gehäuses verschiebbar zu haltern. Dazu können in Weiterbildung der Erfindung am Gehäuse Schienen, vorzugsweise in Gestalt von Profilschienen angeordnet sein, welche das Positioniermittel verschiebbar entlang der Schienen haltern.

Anhand einiger Figuren wird im Folgenden eine beispielhafte Ausgestaltung der Erfindung näher beschrieben. Dabei zeigen
- Figur 1: eine Seitenansicht eines Magnetsensors mit einem an dessen Gehäuse angeformten Positioniermittel vor dem Ausrichten an einem Polrad,
- Figur 2: den Magnetsensor aus Figur 1 während der Ausrichtung am Polrad,
- Figur 3: den Magnetsensor aus Figur 1 nach der Ausrichtung am Polrad und nach dem Abtrennen des Positioniermittels,
- Figur 4: ein Ausführungsbeispiel eines Positioniermittels mit einer Anlagefläche zur axialen Positionierung eines Magnetsensors relativ zu einem Polrad,
- Figur 5: ein Ausführungsbeispiel mit drehbar gehaltertem Positioniermittel, und
- Figur 6: ein Ausführungsbeispiel mit verschiebbar gehaltertem Positioniermittel.

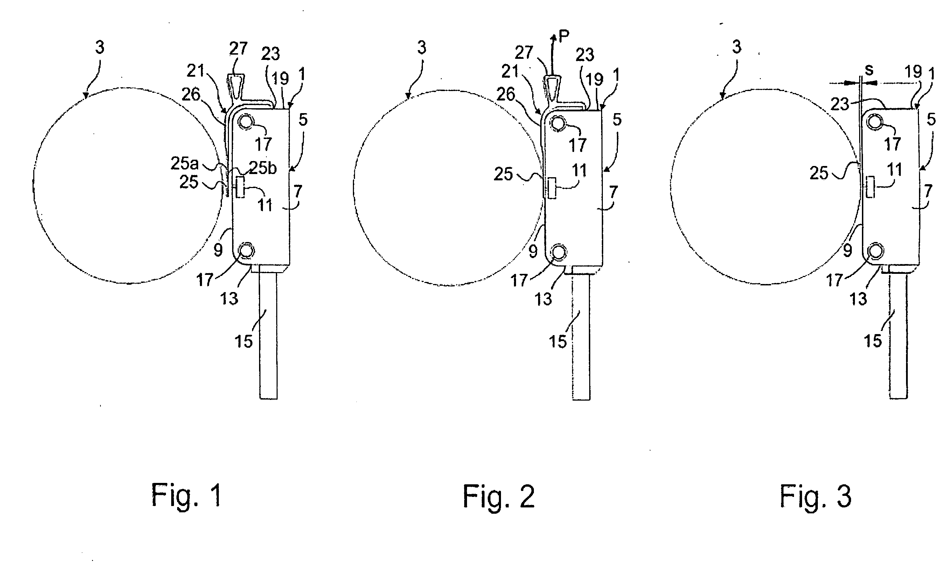

Die Figuren 1 bis 3 illustrieren den Ausrichtvorgang eines Magnetsensors 1 an einem Polrad 3 in einer zeitlichen Abfolge. Das Polrad 3 ist drehfest mit einer Welle verbunden, die an einem Maschinenteil drehbar gelagert ist, und deren Schwenkwinkel oder Drehzahl erfasst werden soll (nicht dargestellt). Der Magnetsensor 1 umfasst ein vorzugsweise im Spritzgussverfahren oder einem anderen Verfahren gefertigtes Gehäuse 5 aus Kunststoff. Im Inneren des Gehäuses 5 sind zwischen zwei parallelen Seitenwänden 7 (von denen nur die vordere sichtbar ist) und unmittelbar angrenzend oder mit nur geringem Abstand zur Vorderwand 9 ein oder mehrere magnetoresistive Sensorelemente 11 angeordnet. Diese sind mit einer (nicht dargestellten) Steuerung verbunden. Am Gehäuseboden 13 ist ein Anschlusskabel 15 aus dem Gehäuse 5 herausgeführt. Alternativ könnte z.B. auch ein Steckeranschluss oder eine andere Schnittstelle (z.B. Funk, optisch) vorgesehen sein. Zum Montieren an einem Anlage- oder Maschinenteil sind zwischen den beiden Seitenwänden zwei durchgehende Bohrungen bzw. Montagelöcher 17 ausgenommen. An der Gehäusedecke 19 ist ein Positioniermittel 21 in Gestalt eines L-förmigen Bandes entlang einer als Schwachstelle oder Sollbruchstelle ausgebildeten, orthogonal zu den beiden Seitenwänden 7 ausgerichteten schmalen Verbindungskante 23 mit dem Gehäuse 5 verbunden. Die Verbindungskante 23 kann sich über die gesamte Breite des Gehäuses 5 oder nur über einen Teil davon erstrecken. Sie verbindet das Ende des kürzeren Schenkels des Positioniermittels 21 durchgehend oder perforationsartig unterbrochen mit der Gehäusedecke 19. Das Positioniermittel 21 ist zusammen mit dem Gehäuse 5 als einstückiges bzw. zusammenhängendes Spritzgussteil gefertigt. Die beiden Schenkel des Positioniermittels 21 folgen in einem geringen Abstand von z.B. 1mm der äusseren Kontur des Gehäuses 5 bzw. der Gehäusedecke 19 und der Vorderwand 9. Zusätzlich zur Verbindungskante 23 kann das Positioniermittel 21 auch noch an weiteren Stellen punktuell oder entlang weiterer Verbindungskanten (nicht dargestellt) mit dem Gehäuse 5 bzw. mit der Gehäusedecke 19 und/oder der Vorderwand 9 verbunden sein, sodass das Positioniermittel 21 vor seiner Benutzung ausreichend stabil am Gehäuse 5 gehalten ist und nicht versehentlich abgerissen werden kann.

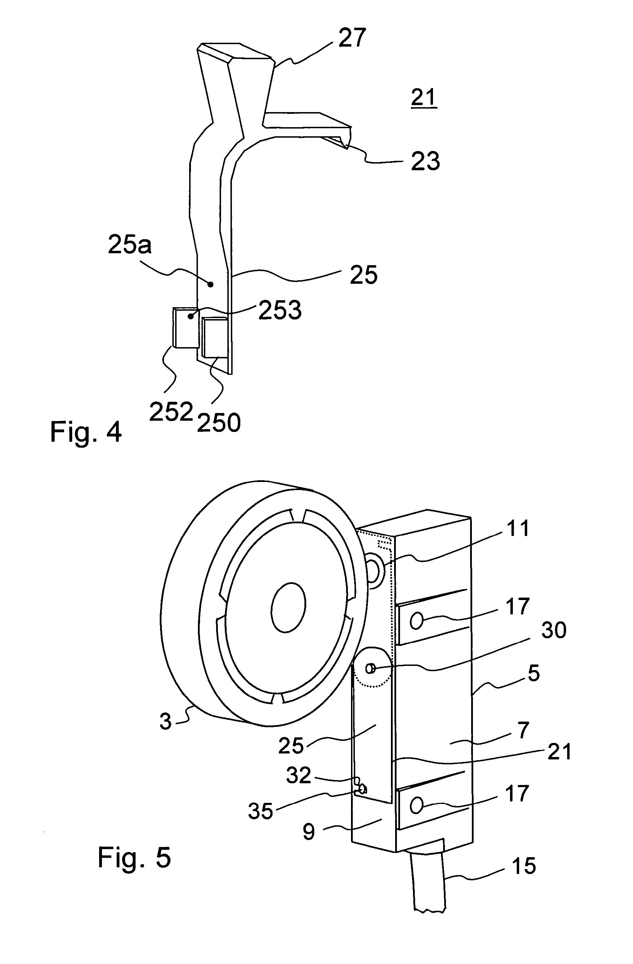

Der Endbereich bzw. ein Bereich des längeren Schenkels des Positioniermittels 21, der vor dem bzw. den Sensorelementen 11 angeordnet ist, ist als Abstandhalter 25 oder Distanzplatte ausgebildet und hat eine definierte Stärke s, die dem gewünschten Abstand zwischen der Vorderwand 9 des Gehäuses 5 und dem Polrad 3 entspricht. Im dargestellten Beispiel beträgt die Stärke s etwa 0.4mm und ist somit geringer als die Dicke des an den Distanzhalter 25 angrenzenden, als Trägerarm 26 ausgebildeten Teils des bandförmigen Positioniermittels 21. Diese Dicke kann z.B. in der Grössenordnung von etwa 1mm liegen. Die Stärke s des Distanzhalters 25 ist entsprechend den jeweiligen Anforderungen des Sensors vorgegeben und kann grundsätzlich beliebige Werte aufweisen. Diese Werte können beispielsweise im Bereich von 0.2mm bis 20mm liegen und somit auch grösser sein als die Stärke des Trägerarms 26. Im mittleren Bereich des Positioniermittels 21, wo die beiden Schenkel ineinander übergehen, ist eine zur Aussenseite hin vorstehende Lasche bzw. ein kleiner Haltegriff 27 angeformt.
Wie in Figur 2 dargestellt, kann bei der Montage des Magnetsensors 1 an einem Maschinenteil, welches starr mit dem Lager der Welle, welche das Polrad 3 trägt, verbunden ist, der Abstand zwischen der Vorderseite 3 des Magnetsensors 1 und dem Umfang bzw. der Mantelfläche des Polrades 3, mit Hilfe des Positioniermittels 21 exakt auf den gewünschten Betrag s eingestellt werden. Dabei wird der Magnetsensor 1 leicht gegen das Polrad 3 gedrückt, wobei eine erste Anlagefläche 25b des freien oder gegebenenfalls nur durch schmale Verbindungsstege (nicht dargestellt) mit dem Gehäuse 5 verbundenen plattenartigen Distanzhalters 25 an der Vorderwand 9 des Magnetsensors 1 anliegt, und wobei eine zweite Anlagefläche 25a des Distanzhalters 25 an der Mantelfläche des Polrades 3 anliegt. Der Distanzhalter 25 wird dabei mit geringer Kraft zwischen dem Gehäuse 5 und dem als Referenzobjekt benutzten Polrad 3 festgeklemmt. In dieser Lage wird der Magnetsensor 1 am jeweiligen Maschinenteil befestigt. Im vorliegenden Beispiel kann dies z.B. durch Festschrauben des Gehäuses 5 am Maschinenteil mittels zweier in die Montagelöcher 17 eingeführter Schrauben erfolgen. Anschliessend wird das Positioniermittel 21 durch Ziehen am Haltegriff 27 in Richtung des Pfeils P (Figur 2) vom Gehäuse 5 abgetrennt bzw. abgerissen. Dabei wird auch der Distanzhalter 25 zwischen dem Magnetsensor 1 und dem Polrad 3 herausgezogen und entfernt, ohne dass sich dadurch die relative Lage des Gehäuses 5 und des Referenzobjekts ändern würde.
Bei alternativen Ausgestaltungen können anstelle eines einfachen Distanzhalters 25, komplexere Anschlagvorrichtungen vorgesehen sein, welche Vorgabe der Position und/oder der Lage des Gehäuses (5) relativ zu einem Referenzobjekt nicht nur in einer Dimension, sondern in mehreren Dimensionen ermöglichen. So könnte beispielsweise das Positioniermittel 21 eine oder mehrere weitere Anlageflächen umfassen, die im dreidimensionalen Raum unterschiedlich ausgerichtet sind. Im vorliegenden Beispiel des Magnetsensors 1 könnte etwa zusätzlich zum Abstandhalter 25 ein weiteres Anschlagelement vorgesehen sein, welches an der zweiten Anlagefläche 25b hervorragt und zur axialen Ausrichtung am Polrad 3 dient, indem es mit einer Seitenfläche des Polrades 3 in Anlage gebracht wird. Anzahl, Art, Anordnung, Form und Ausrichtung von Anschlagelementen können entsprechend der jeweiligen Anforderungen für die Positionierung und/oder Ausrichtung (z.B. Neigungswinkel) des Sensors relativ zu einem Referenzobjekt in beliebiger Weise vorgegeben werden.
Als Referenzobjekte können nicht nur die zu erfassenden Objekte, sondern auch beliebige Anlage- oder Maschinenteile dienen, bezüglich welcher der Sensor positioniert und/oder ausgerichtet werden muss.
Das Gehäuse (5) kann beliebige Gestalt aufweisen und muss nicht zwingend vollständig als Kunststoff-Spritzgussteil gefertigt sein. So könnte beispielsweise ein Positioniermittel 21 auch bei einem Gehäuse oder einem Gehäuseteil aus Metall angespritzt sein.
Sind für gewisse Anwendungen unterschiedliche Positioniermittel (21) in Verbindung mit einem vorgegebenen Gehäuse (5) erforderlich, so können diese mit unterschiedlichen Wechseleinsätzen für das Spritzgussteil hergestellt werden. Bei alternativen Ausgestaltungen der Erfindung könnte das Positioniermittel (21) auch mittels einer lösbaren Rastverbindung mit dem Gehäuse (5) verbunden sein.
Ein Ausführungsbeispiel eines Positioniermittels 21 mit einer Anlagefläche zur axialen Positionierung eines Magnetsensors relativ zu einem Polrad, wie es weiter oben beschrieben wurde, zeigt Fig. 4. Die Grundgestalt des Positioniermittels 21 mit Verbindungskante 23 und Abstandhalter 25 entspricht der auch in den Figuren 1 bis 3 gezeigten Ausführungsform. Auf der zweiten Anlagefläche 25a des Abstandhalters 25, welche bei der Montage an der Mantelfläche des Polrades anliegt, sind zwei plattenförmige Ausformungen 250, 251 vorgesehen. Deren Abstand ist so bemessen, dass das Polrad mit seinen Stirnflächen zwischen den einander zugewandten Innenseiten 253 aufgenommen werden kann. Die Ausformungen 250, 251 bewirken dabei eine Fixierung der axialen Position an den Stirnflächen des Polrades.
Die der Erfindung zugrunde liegende Idee, an einem Gehäuse ein abtrennbares oder reversibel aus dem Positionierbereich entfernbares Positioniermittel auszubilden, kann vorteilhaft bei beliebigen Sensoren, insbesondere bei Distanzsensoren oder Näherungsschaltern, die nach unterschiedlichen physikalischen Prinzipien funktionieren können, angewendet werden. Beispiele hierfür sind magnetische, induktive, kapazitive, optische und Ultraschall-Näherungsschalter bzw. -Distanzsensoren. Der Anwendungsbereich der Erfindung ist nicht nur auf Gehäuse (5) von Sensoren beschränkt. Derartige Positioniermittel können bei beliebigen Gehäusen ausgebildet werden, die relativ zu einem Objekt positioniert werden müssen, z.B. auch bei Gehäusen von Aktoren.

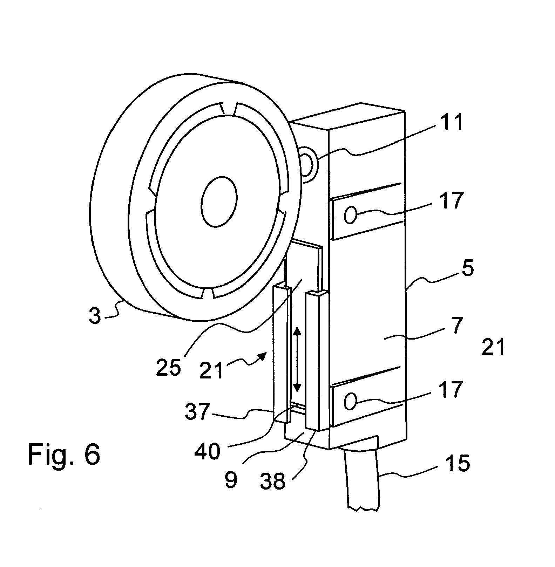

Anhand der Figuren 5 und 6 werden nachfolgend zwei Ausführungsbeispiele mit reversibel aus dem Positionierungsbereich entfernbaren Positioniermitteln beschrieben. Wie auch in den vorangegangenen Beispielen umfasst das Positioniermittel einen Abstandhalter 25 beziehungsweise eine Distanzplatte, um den Sensor oder Aktor in definiertem Abstand zu einem Referenzobjekt anordnen zu können. Beide Beispiele werden wieder anhand eines Magnetsensors oder Drehgebers erläutert.

Der in Figur 5 gezeigte Magnetsensor weist dabei ein drehbar gehaltertes Positioniermittel 21 auf. Der als Distanzplatte ausgebildete Abstandhalter 25 ist an einer an der Vorderwand 9 angeordneten Drehachse 30 schwenkbar befestigt. Die Schwenk- oder Drehachse des Abstandhalters 25 liegt also parallel zur Abstandsstrecke zwischen dem Polrad 3 und der Vorderwand. Dies ermöglicht ein seitliches Wegschwenken des Positioniermittels nach der Justage und Befestigung des Gehäuses 5. Der Positionierbereich befindet sich entsprechend dem einzustellenden Abstand vor dem oder den Sensorelementen 11, beziehungsweise zwischen der Vorderwand 9 und dem Referenzobjekt, hier im Speziellen das Polrad 3.
In Fig. 5 ist das Positioniermittel 21 in aus dem Positionierbereich entfernter Stellung, entsprechend der Stellung für den Betrieb des Sensors dargestellt. Zur Verdeutlichung ist das Positioniermittel 21 nochmals in gestrichelten Linien in der Positionierungs- oder Justagestellung, in welcher sich der Abstandhalter 25 vor dem Sensorelement 11 befindet, eingezeichnet.

Um zu verhindern, dass sich das Positioniermittel 21 im Betrieb des Sensors unbeabsichtigt wieder in die gestrichelt eingezeichnete Justagestellung bewegt, kann eine Verriegelung vorgesehen werden, mit welcher das Positioniermittel 21 in der in Figur 5 gezeigten Betriebsstellung, also der Stellung, die für den Betrieb des Sensors vorgesehen ist, arretiert werden. Dazu ist in dem in Fig. 5 gezeigten Beispiel im Abstandhalter 25 eine Nut 32 vorgesehen, die an einem Stift 35 am Gehäuse 5 eingerastet werden kann.

Figur 6 zeigt ein weiteres Ausführungsbeispiel mit einem reversibel vom Positionierbereich am Sensorelement 11 entfernbaren Positionierungsmittel 21. Bei diesem Ausführungsbeispiel ist das Positioniermittel 21 entlang des Gehäuses 5 verschiebbar gehaltert. Dazu sind an der Vorderseite 9 zwei Profilschienen 37, 38 angeordnet, in welcher der plattenförmige Abstandhalter 25 entlang der Vorderseite 9 längsverschiebbar gehaltert ist. In der Darstellung der Figur 6 ist der Abstandhalter 25 ebenfalls bereits in der Betriebsposition des Sensors. Der Abstandhalter 25 ist demgemäß aus dem Positionierungsbereich vor dem Sensorelement 11 durch Verschieben entfernt. Auch hier kann eine Arretierung vorgesehen werden, welche verhindert, dass der Abstandhalter 25 ohne Eingriff wieder in den Positionierungsbereich gerät. Dazu ist bei dem in Figur 6 gezeigten Beispiel eine Nut 40 vorgesehen, welche in einer Rastnase, die beispielsweise in der Profilschiene angeordnet ist, verrastet.

Die erfindungsgemäßen Merkmale können insbesondere wie folgt zusammengefasst werden:

Ein erfindungsgemäßes Aktor- oder Sensorgehäuse umfasst eine Justageeinrichtung mit der Positioniereinrichtung, beziehungsweise dem Positioniermittel, , und wobei im Gehäuse zumindest ein Sensor- oder Aktorelement angeordnet oder anordenbar ist, und wobei die Positioniereinrichtung einen an der Gehäuseaussenseite aussen befestigten Abstandhalter umfasst, wobei der Abstandhalter eine Dicke aufweist, welche den Arbeitsabstand des Sensor- oder Aktorelements zu einem mit dem Sensor- oder Aktorelement zusammenwirkenden Referenzobjekt festlegt, insbesondere, welche dem Arbeitsabstand zwischen der Gehäuseaussenseite und dem Referenzobjekt entspricht, und wobei der Abstandhalter derart abtrennbar oder bewegbar am Gehäuse befestigt ist, dass der Abstandhalter nach der Befestigung des Sensorgehäuses in Gegenüberstellung des Sensor- oder Aktorelements aus dem Arbeitsbereich des Sensor- oder Aktorelements entfernbar ist. Das Entfernen kann dabei wie gesagt durch Abtrennen oder durch ein reversibles Bewegen des Abstandshalters aus dem Arbeitsbereich des Sensor- oder Aktorelements erfolgen.

Damit wird ein Verfahren zur Montage eines Sensors oder Aktors ermöglicht, bei welchem das Gehäuse mit dem daran befestigten Abstandhalter und das Referenzobjekt in Anlage gebracht werden, so dass der Abstand zwischen der Gehäuseaussenwand und dem Referenzobjekt durch den Abstandhalter vorgegeben und festgelegt ist. Dann wird das Sensor- oder Aktorgehäuse befestigt und nach der Befestigung des Sensor- oder Aktorgehäuses der zwischen der Gehäuseaussenwand und dem Referenzobjekt vorhandene Abstandhalter entfernt.

## Patentansprüche

1. Vorrichtung zum Anordnen eines Gehäuses (5) in einer vorgegebenen Lage relativ zu einem Referenzobjekt, **dadurch gekennzeichnet, dass** am Gehäuse (5) mindestens ein abtrennbares oder reversibel von einem Positionierungsbereich entfernbares, mit dem Referenzobjekt in Anlage bringbares Positioniermittel (21) ausgebildet ist.

2. Vorrichtung nach Anspruch 1, **dadurch gekennzeichnet, dass** das Gehäuse (5) ein Sensor- oder Aktorgehäuse ist.

3. Vorrichtung nach eine der Ansprüche 1 oder 2, **dadurch gekennzeichnet, dass** das Positioniermittel (21) mindestens ein Anschlagelement zum Positionieren und/oder Ausrichten am Referenzobjekt umfasst.

4. Vorrichtung nach Anspruch 3, **dadurch gekennzeichnet, dass** das mindestens eine Anschlagelement ein als Abstandhalter (25) oder Distanzplatte ausgebildeter Abschnitt des Positioniermittels (21) ist, und dass dieser Abstandhalter (25) eine dem Gehäuse (5) zugewandte erste Anlagefläche (25b) und eine zum Anlegen an das Referenzobjekt ausgebildete zweite Anlagefläche (25a) umfasst.

5. Vorrichtung nach einem der Ansprüche 3 oder 4, **dadurch gekennzeichnet, dass** das Positioniermittel (21) einen das Gehäuse (5) und das Anschlagelement verbindenden Trägerarm (26) umfasst, und dass die Verbindung des Trägerarms (26) mit dem Gehäuse (5) als Sollbruchstelle ausgestaltet ist.

6. Vorrichtung nach Anspruch 5, **dadurch gekennzeichnet, dass** am Trägerarm (26) ein Haltegriff (27) zum Abtrennen des Positioniermittels (21) vom Gehäuse (5) ausgebildet ist.

7. Vorrichtung nach einem der Ansprüche 1 bis 6, **dadurch gekennzeichnet, dass** das Gehäuse (5) als Kunststoff-Spritzgussgehäuse gefertigt ist, und dass das Positioniermittel (21) einstückig am Spritzgussgehäuse angeformt ist.

8. Vorrichtung nach einem der Ansprüche 2 bis 7, wobei das Gehäuse (5) ein Sensorgehäuse ist, **dadurch gekennzeichnet, dass** im oder am Gehäuse (5) ein oder mehrere Sensorelemente (11) angeordnet sind.

9. Vorrichtung gemäß Anspruch 1 oder 2, wobei das Positioniermittel so gehaltert ist, dass es auch in der aus dem Positionierungsbereich entfernten Stellung am Gehäuse (5) befestigt ist.

10. Vorrichtung gemäß vorstehendem Anspruch, **dadurch gekennzeichnet, dass** das Positioniermittel (21) drehbar gehaltert ist.

11. Vorrichtung gemäß Anspruch 9, **dadurch gekennzeichnet, dass** das Positioniermittel (21) entlang des Gehäuses (5) verschiebbar gehaltert ist.

12. Verfahren zum Anordnen eines Gehäuses (5) in einer vorgegebenen Lage relativ zu einem Referenzobjekt mittels einer Vorrichtung nach einem der Ansprüche 2 bis 11, **dadurch gekennzeichnet, dass** der Sensor oder Aktor durch Anlage des mindestens einen Anschlagelements am Referenzobjekt in die geforderte Position und/oder Lage gebracht wird.

13. Verfahren nach Anspruch 12, **dadurch gekennzeichnet, dass** das Gehäuse (5) an einem Anlage- oder Maschinenteil befestigt wird, und dass danach das Positioniermittel (21) vom Gehäuse (5) getrennt oder aus dem Positionierbereich herausbewegt wird.
